# NEUE EUROPÄISCHE PATENTSCHRIFT

(11) **EP 1 533 101 B2**
(45) Veröffentlichungstag und Bekanntmachung des Hinweises auf die Entscheidung über den Einspruch: **21.12.2011**
(45) Hinweis auf die Patenterteilung: 19.04.2006
(21) Anmeldenummer: 04023632.5
(22) Anmeldetag: 04.10.2004
(51) Int. Cl.: B29C 47/42, B29C 47/62, B29C 47/64, B29C 47/60

(54) **Planetwalzenextruder zum Mischen und Extrudieren von Kunststoffen**
Planetary roller extruder for compounding and extruding plastic masses
Extrudeuse à vis planétaires pour la préparation et l'extrusion de masses plastiques

(30) Priorität: 06.11.2003 DE 10352332
(43) Veröffentlichungstag der Anmeldung: 25.05.2005
(73) Patentinhaber: Entex Rust & Mitschke GmbH, 44806 Bochum (DE)
(72) Erfinder: Rust, Harald, 44806 Bochum (DE)
(74) Vertreter: Kaewert, Klaus

(56) Entgegenhaltungen:
- DE-A1- 10 334 363
- US-A- 3 680 844
- Michael Roth, Planetwalzen- extruder; VDI-K, Seminar: Compoundiersysteme in Vergleich, 21. und 22. März 2001, Bad Dürkheim

## Beschreibung

Die Erfindung betrifft einen Planetwalzenextruder oder einen Planetwalzenteil. Planetwalzenextruder besitzen eine Zentralspindel und umlaufenden Planetspindeln sowie einer außen angeordneten Buchse oder dergleichen, wobei die Zentralspindel mit Zähnen versehen ist und in Eingriff mit Zähnen der Planetspindeln steht und die Zähne der Planetspindeln in Eingriff mit einer Innenverzahnung der Buchse stehen. Die Verzahnung verläuft gewendelt auf der Zentralspindel und auf den Planetspindeln außen.
Die Verzahnung der Buchse verläuft gewendelt innen.
Das Maß der Wendelung wird als Steigung bezeichnet.
Außerdem wird bei der Wendelung zwischen Rechtsgängigkeit und Linksgängigkeit unterschieden.

Üblicherweise wird die Zentralspindel angetrieben, während die umgebende Buchse ortsfest angeordnet ist. Dadurch werden die Planetspindeln von der Zentralspindel mitbewegt.

Die innen verzahnte Buchse ist fest im Extrudergehäuse angeordnet.

Der Planetwalzenextruder hat mit anderen Extrudern gemeinsam, daß er am einen Ende mit einer Materialeinspeisung versehen ist und am anderen Ende den Materialaustritt besitzt. Zwischen Ein- und Austritt können zusätzliche Materialien eingespeist werden.
Zwischen Ein- und Austritt wirken die Zentralspindel, die Planetspindeln und die Buchse auf das Einsatzmaterial. Je nach Wunsch kann festes Kunststoffgranulat dadurch plastifiziert und aufgeschmolzen und/oder Mischungsanteile in der Schmelze dispergiert und/oder die Schmelze homogenisiert und/oder die Schmelze gekühlt werden. Darüber hinaus kann der Extruder noch andere Aufgaben erfüllen.

Bei allen Planetwalzenextrudern ist bekannt, daß sie unterschiedliche Aufgaben erfüllen können. Die Planetwalzenextruder können das zu Material einziehen und/oder komprimierung und/oder aufschmelzen und/oder dispergieren und/oder homogenisieren und/oder kühlen und/oder durch eine Düse auspressen. Daneben kommen noch andere Aufgaben in Betracht.

Wahlweise werden verschiedene Extruder miteinander kombiniert. Zum Beispiel erfolgt das in einer Kaskadenbauart oder in Form eines Hauptextruders mit einem Seitenarmextruder. Zumeist kommen Mischformen vor, bei denen in einem Extruder mehrere Teile unterschiedlicher Bauart miteinander kombiniert werden, z.Beispiel Planetwalzenteile mit Einschneckenteilen oder Planetwalzenteilen mit Doppelschneckenteilen.
Im weiteren wird nur von Planetwalzenextrudern gesprochen. Das schließt die Planetwalzenteile und deren Kombination mit Extruderteilen anderer Bauart ein.

Bei durchgehender Verzahnung benötigt das Einsatzmaterial eine von der Verzahnung und von der Drehzahl der Spindeln abhängige Zeit für den Weg vom Eintritt bis zum Austritt.

Aus der DE 4308098 A 1 ist es bekannt, Planetspindeln mit einer Igelverzahnung zu verwenden. Die Igelverzahnung entsteht, wenn in die Verzahnung Lücken eingearbeitet werden. Unterbrechungen der Verzahnung sind schon aus der DE2257007 A1 bekannt.
Aus der DE 10334363 ist bekannt duse Unterbrechung als gegenlänfige Nut auszuführen.
Die Lücken entstehen durch ringförmige Ausfräsungen.

Die Igelverzahnung hat sich bewährt.
Gleichwohl hat sich die Erfindung die Aufgabe gestellt, die Igelverzahnung zu verbessern. Dabei geht die Erfindung davon aus, daß die Verzahnung in die Rohlinge der Planetspindeln gefräst wird. Es gibt noch andere Methoden zur Herstellung der Verzahnung. Dazu gehören Drehen, Schleifen, Funkenerosion.
Nach der Erfindung wird in die verzahnten Planetspindeln zusätzlich noch eine gegenläufige Verzahnung versehen. Das heißt, in die rechtsgängig verzahnten Planetspindeln wird zur Erzeugung einer erfindungsgemäßen Verzahnung zusätzlich eine linksgänge Verzahnung eingearbeitet.
In die linksgängig verzahnten Planetspindeln wird zur Erzeugung einer erfindungsgemäßen Verzahnung zusätzlich eine rechtsgängige Verzahnung eingearbeitet.

Vorteilhafterweise entsteht durch gegenläufige Verzahnung eine besondere Anordnung der Zähne. Die Zähne erscheinen wie gleichmäßig verteilte Noppen an den Planetspindeln. Während bei der bekannten Igelverzahnung ringförmige, quer zur spindellängsrichtung verlaufende Ausnehmungen entstehen, in denen von der Verzahnung keine Kräfte auf eine durch den Extruder strömende Schmelze ausgeübt wird bzw. nur Kräfte aus der bisherigen Schmelzeströmung und aus nachströmender Schmelze auftreten, ist das bei der erfindungsgemäßen Noppen-Verzahnung anders. In Umfangsrichtung liegt hinter jeder Zahnlücke eine anderer Zahn, so daß keine vergleichbaren Ausnehmungen wie bisher entstehen.
Dadurch entfalten die erfindungsgemäßen Planetspindeln auf der ganzen Länge eine gleichmäßige Wirkung.
Die gegenläufige Verzahnung beeinträchtigt das Zusammenwirken der Planetspindeln mit der Zentralspindel und der innen verzahnten Buchse nicht, weil Planetspindelzähne durch die gegenläufige Verzahnung lediglich Ausnehmen erfahren bzw. die stehen bleibenden Zahnteile unverändert in die Verzahnung der Zentralspindel und der Buchse greifen.

Die übliche Verzahnung hat eine Neigung bis 45 Grad.
Vorzugsweise wird eine gegenläufige Verzahnung mit einer anderen Neigung als die übliche Verzahnung eingearbeitet. Die Neigung kann geringer oder größer sein. Der Unterschied zwischen der rechtsgängigen und der linksgängigen Verzahnung beträgt vorzugsweise bis 15 Grad, noch weiter bevorzugt bis 5 Grad.
Vorzugsweise beträgt der Steigungsunterschied mindestens 1 Grad.
Die unterschiedliche Neigung hat vorteilhafte Wirkungen. Insbesondere wird Schmelze dadurch besser gelenkt.

Wahlweise wird auch die gegenläufige Verzahnung mit einer anderen Tiefe gearbeitet. Der Unterschied zwischen der Tiefe linksgängiger und der Tiefe rechtsgängiger Verzahnung wird vorzugsweise in Prozenten von der ursprünglichen Verzahnung angegeben. Bei 0% hat die gegenläufig eingeschnittene Verzahnung die gleiche Tiefe wie die ursprüngliche Verzahnung. Bei -10% hat die gegenläufig eingeschnittene Verzahnung eine um 10% geringere Tiefe als die ursprünglich eingeschnittene Verzahnung. Bei -90% hat die gegenläufig eingeschnittene Verzahnung eine um 90% geringere Tiefe als die ursprünglich eingeschnittene Verzahnung. Entsprechendes gilt bei -80% usw.
Vorzugsweise beträgt die Tiefe der gegenläufig eingeschnittenen Verzahnung mindestens -10%.
Bei +10% hat die gegenläufig eingeschnittene Verzahnung eine um 10% größere Tiefe als die ursprünglich eingeschnittene Verzahnung. Bei +20% hat die gegenläufig eingeschnittene Verzahnung eine um 20% größere Tiefe als die ursprünglich eingeschnittene Verzahnung. Entsprechendes gilt für +30 usw.

Die Vergrößerung der Verzahnungstiefe findet ihre Grenze in der notwendigen Festigkeit der stehenden bleibenden Teile der ursprünglichen Verzahnung. Die notwendige Festigkeit ist auch von der Belastung der Verzahnung abhängig, die sich erst aus dem jeweiligen Anwendungsfall ergibt. Die notwendige Festigkeit kann wahlweise mit einem oder wenigen Versuchen bestimmt werden.

Obiges gilt für Verzahnungsmodule 1 bis 25.
Erfindungsgemäß kommt bei der Verzahnung der Planetenspindeln eine Evolventenverzahnung sowohl für die ursprüngliche Verzahnung als auch für die gegenläufige Verzahnung zur Anwendung.

Wahlweise können auch erfindungsgemäß verzahnte Planetenspindeln mit herkömmlich verzahnten Planetenspindeln kombiniert werden.

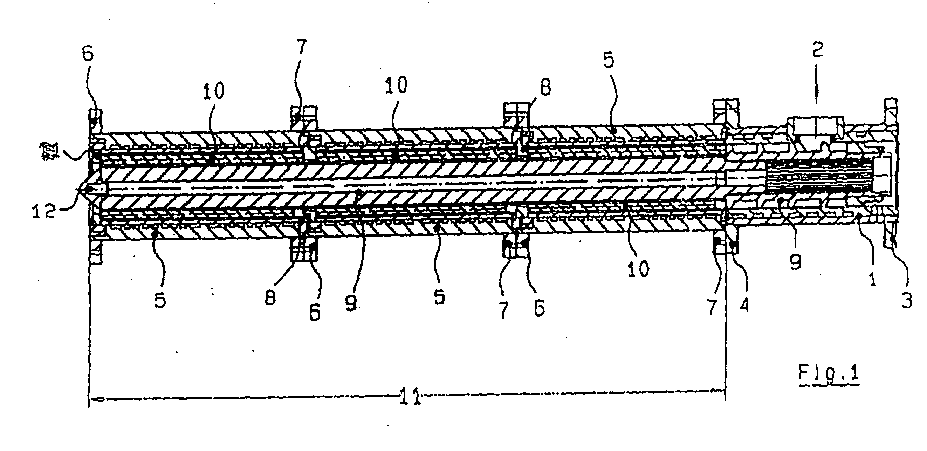

Fig. 1 zeigt einen Extruder mit einem Bereich 11. Im Bereich 11 besitzt der Extruder 3 Planetwalzenteile. Jeder Planetwalzenteil besteht aus einem äußeren, innen verzahnten Gehäuse 5, aus Planetspindeln 10 und einer Zentralspindel 9. Die Zentralspindel 9 kämmt mit den Planetspindeln 10. Die Planetspindeln 10 kämmen darüber hinaus auch mit der Innenverzahnung der Gehäuse 5.

Jedes Gehäuse 5 hat die Form eines Rohres, das an beiden Enden Flansche 6 bzw. 7 aufweist. An den Flanschen 6 und 7 sind Planetwalzenteile miteinander verschraubt. Dabei werden die Gehäuse 5 durch Zentrierringe 8 zentriert. Die Zentrierringe 8 sind in entsprechenden Ausnehmungen der Gehäuseflansche eingelassen.

Zujedem Gehäuse 5 eines Planetenteils gehört auch eine Buchse. Die Buchse sitzt innen im Gehäuse und bildet die Innenverzahnung des Gehäuses. Das heißt, für das Zusammenwirken mit den Planetspindeln sind die Buchsen innenseitig verzahnt.
Darüber hinaus dienen die Buchsen der Temperierung der Planetwalzenteilen.

Dazu sind die Buchsen ausseitig mit wendelförmig verlaufenden Kanälen für Temperierungsmittel versehen. Die Gehäuse können buchsenseitig glatt sein. Nach Montage der Buchsen in den Gehäusen werden die Kanäle in den Buchsen durch das Gehäuse geschlossen.
Das Temperierungsmittel ist im Ausführungsbeispiel Wasser, in anderen Ausführungsbeispielen Öl.
Je nach Bedarf muß das Temperierungsmittel die Gehäuse 5 kühlen oder beheizen.
Jedes Gehäuse 5 eines Planetwalzenteils ist im Ausführungsbeispiel mit einer Kühlstrecke und einer Beheizungsstrecke versehen. Zu jeder Stecke gehören spiralförmig verlaufende Kanäle, wie sie oben beschrieben sind. Im Ausführungsbeispiel werden sind die Kanäle zweigängig in der Buchse vorgesehen, so daß ein Kanalsystem für Beheizung und das andere Kanalsystem für die Kühlung verwendet werden kann. In anderen Ausführungsbeispielen wird das Temperierungsmittel je nach Bedarf erhitzt oder gekühlt.

Die Buchsen werden bei der Montage in die Gehäuse eingeschoben. Das geschieht vorzugsweise vor der Verschraubung der Flansche 6 und 7. Die Buchsen können aber auch nach der Verschraubung der Flansche 6 und 7 eingeschoben werden. Dazu sind die Zentrierringe mit einer Bohrung versehen, die gleich der Gehäusebohrung ist.

Zwischen den Buchsen sitzt jeweils ein Anlaufring 8. Der Anlaufring hält die Planetspindeln 10 in axialer Richtung in ihrer Umlaufposition um die gemeinsame Zentralspindel 9. Die Planetspindeln 10 gleiten bei ihrem Umlauf an dem Anlaufring 8 entlang.

Alle Planetwalzenteile haben eine gemeinsame Zentralspindel 9.

Die Spitze der Zentralspindel ist mit 12 bezeichnet und korrespondiert mit einem Anlaufring 8 am vorderen Ende des Bereiches 11, der wie die anderen Anlaufring die Zentralspindel in einem Abstand umgibt, so daß sich ein Spalt bildet, durch den das extrudierte Material in die Extruderdüse gedrückt wird. Die Extruderdüse ist nicht dargestellt.

An dem Ende der Zentralspindel 9, welche der Spitze 12 abgewandt ist, bildet die Zentralspindel 9 eine Schnecke für eine Einlaufzone. In diesem Bereich ist ein separates Gehäuse 1 mit einer Einlauföffnung 2 vorgesehen. Das Gehäuse 1 ist aufgebaut wie das Gehäuse 5. Die zugehörigen Flansche sind mit 3 und 4 bezeichnet. Das Zusammenwirken des Flansches 4 mit dem Anschlußflansch 7 des nächsten Gehäuses 5 ist das gleiche wie das Zusammenwirken der Flansche 6 und 7. Die Füllschnecke am rechten Teil der Zentralspindel hat nur Füllfunktion, im Ausführungsbeispiel keine Plastifizierungs- und keine wesentliche Homogenisierungsfunktion.

Jedes Planetwalzenteil ist im Ausführungsbeispiel 600 mm lang, so daß eine Gesamtlänge von 1,8 m entsteht.

Alle Planetwalzenteile sind in nicht dargestellter Weise so abgestützt, daß eine für den Betrieb wesentliche Durchbiegung verhindert wird.

Jedes Planetwalzenteil besitzt 9 Planetspindeln.

In Fig. 2 bis 4 sind verschiedene Planetspindeln schematisch dargestellt. Die Planetspindeln der Fig. 2 sind mit 20 bezeichnet und herkömmlicher Art
Der dort verwendete Rohling ist mit einer Verzahnung 21 versehen worden.

Fig. 3 zeigt eine Planetspindel 25 mit Igelverzahnung. Die Igelverzahnung unterscheidet sich von der Verzahnung nach Fig. 2 durch ringförmige Ausnehmungen 24, welche in Abständen in die Planetspindeln gefräst worden sind. Die zwischen den Ausnehmungen 24 verbliebenen Zähne werden als Igelform bezeichnet.

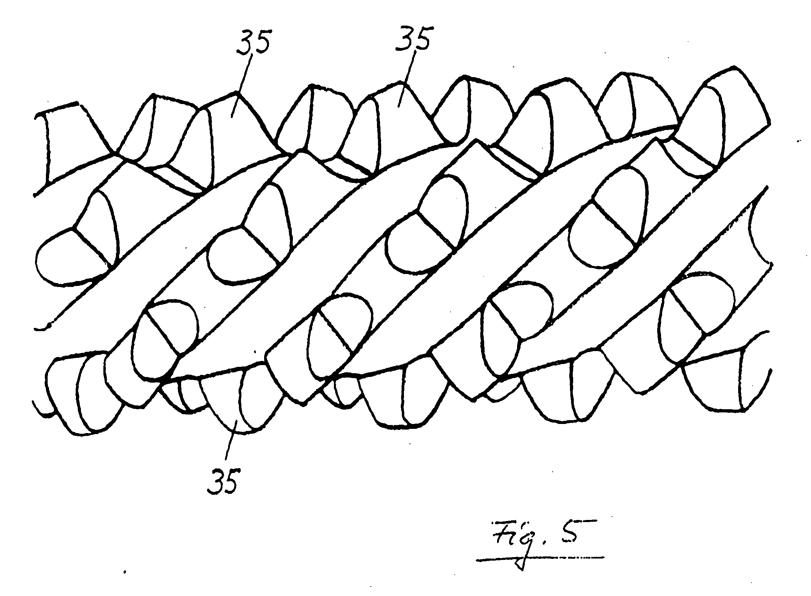

Die Fig. 4 zeigt eine schematische Darstellung einer Planetspindel 30 mit Noppenverzahnung. Dabei ist der Rohling zunächst mit der gleichen Verzahnung 32 wie die Planetspindel 20 versehen worden. Anschließend ist eine gegenläufige Verzahnung 31 in die Planetspindel geschnitten worden.
Die Planetspindel nimmt dadurch die in Fig. 5 abgebildet Form an. Es entstehen noppenförmige Zähne 35 ähnlich Pyramiden mit rechteckförmiger Basis.

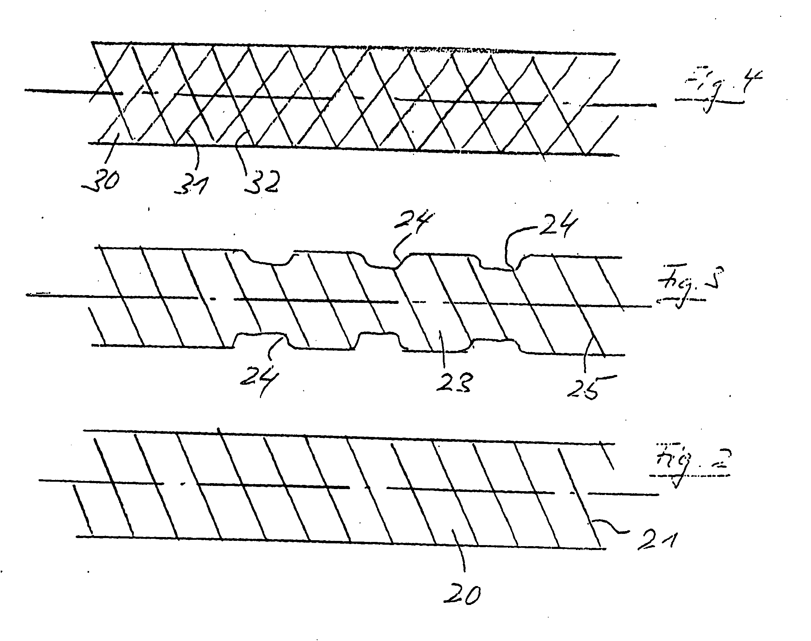

Im Ausführungsbeispiel nach Fig. 4 sind neun gleiche Planetspindeln vorgesehen.
In anderen Ausführungsbeispielen werden die in Fig.4 dargestellten Spindeln mit anderen Spindeln kombiniert. Die anderen Spindeln können aufweisen:
a) ganz oder teilweise eine andere gegenläufige Verzahnung
b) ganz oder teilweise eine Igelverzahnung
c) ganz oder teilweise eine herkömmliche Verzahnung

Die Zahl der anderen Spindeln wird durch versuchsweise Auswechselung optimiert.
Die Auswechselung der Planetspindeln ist am Planetwalzenextruder verhältnismäßig einfach. Dabei läßt sich durch Beurteilung des Extrusionsergebnisses kontrollieren, ob die Auswechselung zu einer Verbesserung oder Verschlechterung führt.

Wahlweise kann auch jede einzelne Spindel gleichzeitig verschiedene Verzahnung aufweisen.

Im Ausführungsbeispiel nach Fig. 3 und 4 hat die gegenläufige Verzahnung 31 eine Tiefe, die 1 mm geringer als die Tiefe der Verzahnung 32. Die Tiefe ist im Ausführungsbeispiel die Frästiefe zwischen zwei benachbarten Zähnen.

## Patentansprüche

1. Planetwalzenextruder mit einer Zentralspindet, Planetspindeln und einer innen verzahnten Gehäusebuchse bzw. einem innen verzahnten Gehäuse, wobei die Planetspindeln sowohl mit der Zentralspindel als auch mit dem innen verzahnten Gehäuse kämmen,
wobei die Planetspindeln mit den in Richtung des Schmelzestromes hinteren Stirnflächen an einem Anlaufring gleiten, wobei die Verzahnung durch wendelartig an der Zentralspindel und an den Planetspindeln verläuft und wendelartig in der Gehäusebuchse bzw. in dem Gehäuse verläuft,
wobei die Verzahnung rechtsgängig oder linksgängig verläuft,
wobei eine Evolventenverzahnung vorgesehen ist,
**dadurch gekennzeichnet, daß** die Planetspindeln zusätzlich mit einer gegenläufigen Verzahnung versehen ist und
daß die gegenläufige Verzahnung als Evolventenverzahnung ausgebildet ist und
durch die gegenläufige Verzahnung Noppen gebildet werden.

2. Planetwalzenextruder nach Anspruch 1, **dadurch gekennzeichnet, daß** die gegenläufige Verzahnung eine andere Steigung als die ursprüngliche Verzahnung besitzt.

3. Planetwalzenextruder nach Anspruch 2, **dadurch gekennzeichnet, daß** der Steigungsunterschied bis 15 Grad beträgt.

4. Planetwalzenextruder nach Anspruch 3, **dadurch gekennzeichnet, daß** der Steigungsunterschied bis 5 Grad beträgt.

5. Planetwalzenextruder nach Anspruch 3 oder 4, **dadurch gekennzeichnet, daß** der Steigungsunterschied mindestens 1 Grad beträgt.

6. Planetwalzenextruder nach einem der Ansprüche 1 bis 5, **dadurch gekennzeichnet, daß** die gegenläufige Verzahnung eine andere Tiefe als die ursprüngliche Verzahnung besitzt.

7. Planetwalzenextruder nach Anspruch 6, **dadurch gekennzeichnet, daß** die gegenläufige Verzahnung eine größere oder kleinere Tiefe als die ursprüngliche Verzahnung besitzt.

8. Planetwalzenextruder nach Anspruch 6 oder 7, **dadurch gekennzeichnet, daß** die gegenläufige Verzahnung eine Tiefe hat, die mindestens 10% geringer als die Tiefe der ursprüngliche Verzahnung ist.

9. Planetwalzenextruder nach einem der Ansprüche 6 bis 8, **dadurch gekennzeichnet, daß** die gegenläufige Verzahnung eine Tiefe hat, die höchstens um 90% geringer als die Tiefe der ursprünglichen Verzahnung ist.

10. Planetwalzenextruder nach Anspruch 6 oder 7, **dadurch gekennzeichnet, daß** die gegenläufige Verzahnung eine Tiefe hat, die mindestens 10% größer als die Tiefe der ursprüngliche Verzahnung ist.

## Claims

1. Planetary roller extruder with a central spindle, planetary spindles and a housing body with internal toothing or a housing with internal toothing,
wherein the planetry spindles mesh both with the central spindle as well as with the internal toothing of the housing,
wherein the planetary spindles slide with the rear end faces in the direction of the melt stream on a stop ring, wherein the toothing runs helically on the central spindle and on the planetary spindles and helically in the housing body or in the housing,
wherein the toothing runs right-handed or left-handed,
wherein an involute toothing is provided,
**characterised in that** the planetary spindles are additionally provided with a contra-rotating toothing and
that the contra-rotating toothing is designed as involute toothing and pimples are formed by the contra-rotating toothing.

2. Planetary roller extruder according to Claim 1, **characterised in that** the contra-rotating toothing has a different pitch to the primary toothing.

3. Planetary roller extruder according to Claim 2, **characterised in that** the difference in pitch is up to 15 degrees.

4. Planetary roller extruder according to Claim 3, **characterised in that** the difference in pitch is up to 5 degrees.

5. Planetary roller extruder according to Claim 3 or 4, **characterised in that** the difference in pitch is at least 1 degree.

6. Planetary roller extruder according to one of Claims 1 to 5, **characterised in that** the contra-rotating toothing has a different depth than the primary toothing.

7. Planetary roller extruder according to Claim 6, **characterised in that** the contra-rotating toothing has a greater or smaller depth than the primary toothing.

8. Planetary roller extruder according to Claim 6 or 7, **characterised in that** the contra-rotating toothing has a depth that is at least 10% less than the depth of the primary toothing.

9. Planetary roller extruder according to one of Claim 6 to 8, **characterised in that** the contra-rotating toothing has a depth that is at most 90% less than the depth of the primary toothing.

10. Planetary roller extruder according to Claim 6 or 7, **characterised in that** the contra-rotating toothing has a depth that is at least 10% more than the depth of the primary toothing.

## Revendications

1. Extrudeuse à vis planétaires comprenant une broche centrale, des broches planétaires et une douille de boîtier à denture intérieure ou un boîtier à denture intérieure,
les broches planétaires s'engrenant tant avec la broche centrale qu'également avec le boîtier à denture intérieure,
les broches planétaires, avec les faces frontales arrière, en observant dans la direction du flux de masse fondue, glissant sur une bague de franchissement, la denture s'étendant en enroulement sur la broche centrale et sur les broches planétaires et s'étendant en enroulement dans la douille de boîtier ou dans le boîtier,
la denture s'étendant en une denture à pas à droite ou à pas à gauche,
en particulier étant prévue une denture à développante,
**caractérisée en ce que** les broches planétaires sont en outre munies d'une denture à pas en sens inverse, et que
la denture à pas en sens inverse est réalisée sous forme de denture à développante et que des tétons sont formés par la denture à pas en sens inverse.

2. Extrudeuse à vis planétaires selon la revendication 1, **caractérisée en ce que** la denture à pas en sens inverse présente un autre pas que la denture initiale.

3. Extrudeuse à vis planétaires selon la revendication 2, **caractérisée en ce que** la différence de pas va jusqu'à 15 degrés.

4. Extrudeuse à vis planétaires selon la revendication 3, **caractérisée en ce que** la différence de pas va jusqu'à 5 degrés.

5. Extrudeuse à vis planétaires selon la revendication 3, ou 4, **caractérisée en ce que** la différence de pas est d'au moins 1 degré.

6. Extrudeuse à vis planétaires selon l'une des revendications 1 à 5, **caractérisée en ce que** la denture à pas en sens inverse présente une autre profondeur que la denture initiale.

7. Extrudeuse à vis planétaires selon la revendication 6, **caractérisée en ce que** la denture à pas en sens inverse présente une profondeur supérieure ou inférieure à la denture initiale.

8. Extrudeuse à vis planétaires selon la revendication 6 ou 7, **caractérisée en ce que** la denture à pas en sens inverse présente une profondeur d'au moins 10 % inférieure à la profondeur de la denture initiale.

9. Extrudeuse à vis planétaires selon l'une des revendications 6 à 8, **caractérisée en ce que** la denture à pas en sens inverse présente une profondeur au plus de 90 % inférieure à la profondeur de la denture initiale.

10. Extrudeuse à vis planétaires selon la revendication 7, **caractérisé en ce que** la denture à pas en sens inverse présente une profondeur d'au moins 10% supérieure à la profondeur de la denture initiale.
